# EUROPÄISCHE PATENTSCHRIFT

(11) **EP 2 512 769 B1**
(45) Veröffentlichungstag und Bekanntmachung des Hinweises auf die Patenterteilung: **13.06.2018**
(21) Anmeldenummer: 09803745.0
(22) Anmeldetag: 14.12.2009
(51) Int. Cl.: B29C 45/00, D06F 37/26

(54) **KUNSTSTOFF-LAUGENBEHÄLTER, UND VERFAHREN ZUR HERSTELLUNG DES KUNSTSTOFF-LAUGENBEHÄLTERS**
PLASTIC TUB FOR A WASHING MACHINE, AND A METHOD OF MAKING SUCH PLASTIC TUB
CUVE EN PLASTIQUE POUR MACHINE À LAVER, ET PROCÉDÉ DE PRODUCTION DE CETTE CUVE

(43) Veröffentlichungstag der Anmeldung: 24.10.2012
(73) Patentinhaber: BSH Hausgeräte GmbH, 81739 München (DE)
(72) Erfinder: SABATHIL, Andreas, 86633 Neuburg (DE); QUANDT, Christian, 14612 Falkensee (DE); REICHNER, Holger, 17291 Prenzlau (DE); THEEN-VODEGEL, Cornelius, 10555 Berlin (DE)
(86) Internationale Anmeldenummer: PCT/EP2009/067055
(87) Internationale Veröffentlichungsnummer: WO 2011/072712

(56) Entgegenhaltungen:
- EP-A1- 1 538 252
- EP-A2- 0 362 648
- EP-A2- 1 925 707
- EP-B1- 0 508 732
- WO-A1-2009/080421
- DE-B3-102005 018 190
- US-A- 4 399 093

## Beschreibung

Die Erfindung betrifft einen Kunststoff-Laugenbehälter und ein Verfahren zur Herstellung eines Kunststoff-Bauteils des Kunststoff-Laugenbehälters für eine Waschmaschine oder einen Waschtrockner, mit Bindenahten und ein Spritzgussverfahren zur Herstellung eines solchen Kunststoffbauteils, wobei während des Einspritzvorgangs die Kunststoffschmelze über mehrere, räumlich verteilte Zuführungen in die Spritzgießform eingeleitet wird

Die Erfindung ist geeignet für Kunststoff-Laugenbehälter und deren Herstellung, die bei ihrem bestimmungsgemäßen Einsatz hohen Belastungen ausgesetzt sind, Laugenbehälter für Waschgeräte mit einer Beschickungsöffnung in der Frontseite, den sogenannten Frontladern, sind derartig hoch belastete Bauteile. Eine Seitenwand eines solchen Laugenbehälters weist eine mittig angeordnete Lageraufnahme aus Metall auf, in die die Welle bzw. der Drehzapfen der einseitig gelagerten und im Wesentlichen waagerecht ausgerichteten Wäschetrommel eingreift. Insbesondere beim Schleudern, treten abhängig von der Drehzahl der Wäschetrommel und deren Beladung im Laugenbehälter mechanische Belastungen auf. Die dabei von der Wäschetrommel über den Drehzapfen auf den Laugenbehälter übertragenen Kräfte belasten am stärksten den Bereich um die Lageraufnahme.

Auch thermische Belastungen, wie sie beim Betrieb der Geräte auftreten, wirken sich wegen der unterschiedlichen Ausdehnungskoeffizienten des Metalls und des Kunststoffs im Bereich der Lageraufnahme besonders stark aus.

Die Seitenwand des Laugenbehälters mit der mittig angeordneten Lageraufnahme wird durch Spritzgießen in einem Arbeitsgang gefertigt. Dabei wird der mit Zusatzstoffen vermischte Kunststoff auf eine die gewünschte Fließfähigkeit sichernde Temperatur erhitzt und unter Druck in eine Spntzgießform injiziert. Beim Abkühlen schwindet der Kunststoff. Der Schwindungsprozess bewirkt, dass die formschlüssige Verbindung zwischen Laugenbehälter-Seitenwand und Lageraufnahme sich derartig verfestigt, dass eine Lockerung der Verbindung auch bei langjährigem Betrieb der Waschmaschine ausgeschlossen ist. Der Schwindungsprozess bewirkt in nachteiliger Weise aber auch, dass im Kunststoff um die Lageraufnahme starke Spannungen auftreten.

Es ist Stand der Technik insbesondere bei große und kompliziert geformten Laugenbehältern den fluiden Kunststoff in die Spritzgießform über mehrere Anschnitte zuzuführen, deren getrennte Zuleitungen über Ventile steuerbar sind.

Beim Spritzgießen über mehrere Anschnitte bilden sich von jedem Anschnitt ausgehend Fließfronten aus, die sich aufeinander zu bewegen. Treffen zwei Fließfronten aufeinander, bildet sich eine Grenzfläche aus, die bei den im Stand der Technik bekannten Verfahren zumindest annähernd einen geraden Verlauf durch die Wandstärke aufweist. Solche Grenzflächen werden auch als Bindenaht bezeichnet. Bindenähte stellen eine Schwächung der Festigkeit einer Bauteilstruktur dar. Es hat sich herausgestellt, dass es unter Belastung der Bauteilstruktur zu Rissbildungen entlang der Bindenähte kommen kann.

Die beschriebenen mechanischen und thermischen Betriebslasten, sowie die durch das Herstellungsverfahren verursachten Spannungen im Kunststoff wirken verstärkt auf die Bindenähte im Bereich der Lageraufnahme. Dieser Bereich ist besonders anfällig. Es kommt verstärkt zu Rissbildungen und damit zum mechanischen Versagen der Bauteilstruktur und zu Undichtigkeiten. In Folge tritt Wasser in den Lagerbereich ein. Es kommt zu Korrosion und damit zu vorzeitigem Ausfall des Waschgerätes.

Um der Gefahr von Rissbildungen zu begegnen, wird in der DE 10 2006 055 419 B3 ein Laugenbehälters mit einer Profilierung im Bereich einer sich ausbildenden Bindenaht vorgeschlagen, wobei die Profilierung quer zur Bindenaht eingebracht ist. Bei dem Kunststoff-Laugenbehälter gemäß der genannten Offenlegungsschrift weist die Bindenaht entlang ihrer Erstreckung entlang der Bauteiloberfläche eine Sägezahnform auf. Eine derartige Bindenaht ist unempfindlicher gegenüber Zug und Biegebeanspruchung, wodurch die Bauteilstruktur mechanisch stabiler im Bereich der Bindenaht sein kann.

Ferner ist aus EP 1925 707 A2 ein im Spritzgussverfahren hergestellter Kunststoff-Laugenbehälter bekannt, bei dem sich während des Spritzgießens eine verzahnte Bindenaht in einem Wandbereich mit einem Profil eingestellt hat. Darüber hinaus ist aus EP 1538 252 A1 ein spritzgegossener Kunststofflaugenbehälter bekannt.

Bei der Herstellung des Laugenbehälters werden beim Spritzgießen die Fließfronten durch die Profilierung, beispielsweise durch mehrere nebeneinander angeordnete Rippen, derart beeinflusst, dass sie sich bei ihrem Aufeinandertreffen miteinander verzahnen, so dass sich Bindenähte ausbilden, die entlang ihrer Erstreckung die genannte Sägezahnform aufweisen. Durch die Anordnung der Rippen wird der Fließweg des injizierten Kunststoffes derart beeinflusst, dass sich in Fließrichtung der Teilströme Strömungsdome ausbilden, die sich verzahnt aufeinander zu bewegen und entlang der Grenzfläche sägezahnförmig miteinander verbinden.

Gemäß der obigen Offenlegungsschrift wird ein Laugenbehälter mit einer Zugangsöffnung zur Wäschetrommel im zylindrischen Mantel hergestellt. Solche Laugenbehälter werden bei Waschmaschinen eingesetzt, die von oben mit dem Waschgut beschickt werden. Beim Herstellen des Laugenbehälters wird das fluide Kunststoffmaterial im zentralen Bereich der Seitenwand über einen Anschnitt der Spritzgießform zugeführt. Die bei der bekannten Herstellung entstehenden Bindenähte bilden sich in Teilbereichen des Laugenbehälters aus, die unter Betriebsbedingen geringeren Belastungen ausgesetzt sind.

Für die Herstellung solcher Laugenbehälter sind durch Neuanfertigung oder Änderung speziell ausgelegte Spritzgießformen erforderlich. Ein weiterer Nachteil des beschriebenen Herstellungsverfahrens besteht darin, dass der Laugenbehälter im Bereich der Bindenähte erhabene Stege aufweist. Im Bereich der Lageraufnahme gibt es keinen konstruktiven Spielraum für derartige Stege. Nachteilig ist auch, dass es im Bereich der Stege zu erhöhten Spannungen kommt, die bei erhöhten Allaterialanhäufungen immer auftreten.

Die Anwendbarkeit des beschriebenen Herstellungsverfahrens ist begrenzt, da eine solche Lösung im Bereich einer Lageraufnahme, auch Lagernabe genannt, nicht anwendbar ist, weil für das Einbringen der in der obigen Offenlegungsschrift benannten geometrischen Änderungen kein ausreichender Bauraum zur Verfügung steht. Darüber hinaus können solche geometrische Änderungen die Ausbildung einer quer im Material liegenden näherungsweise gradlinigen Bindenaht nicht ausschließen. Daher kann bei hohen Belastungen eine Rissbildung entlang solcher Bindenähte weiterhin auftreten.

Ferner sind aus EP 362 648 A2, US 4 399 093 A und EP 508 732 B1 Kunststoff-Spritzgießverfahren bekannt, mit welchen Kunststoff-Bauteile herstellbar sind, die eine sich beim Spritzgießen durch das Aufeinandertreffen verschiedener Fließfronten des fluiden Kunststoffes ergebenen Bindenaht aufweisen, welche in ihrer quer zur Bauteiloberfläche liegenden Erstreckung gegenüber einer näherungsweise gradlinigen Erstreckung verformt ist.

Aus WO 2009/080421 A1 ist eine Rückwand eines Kunststoff-Laugebehälter, in welcher eine Lageraufnahme für einen Wellenzapfens einer Waschmaschinen-Wäschetrommel angeordnet ist, und ein Spritzgießverfahren zur Herstellung einer solchen Rückwand bekannt.

Es ist Aufgabe der Erfindung einen Laugenbehälter für eine Waschmaschine, der eine in der Seitenwand mit einer dann angeordneten Lageraufnahme aufweist, mit einer erhöhten Belastbarkeit des Bauteils im Bereich der Bindenähte im Bereich der Lageraufnahme anzugeben. Es ist weiterhin Aufgabe der Erfindung ein Verfahren zur Herstellung eines solchen Kunststoff-Bauteils in Form der Seitenwand anzugeben, das beim Spritzgießen über mehrere Anschnitte anwendbar ist. Es ist auch Aufgabe der Erfindung ein Verfahren vorzuschlagen, das einfach gestaltet ist und zu dessen Umsetzung der technologische Aufwand und die Kosten für die eingesetzten Anlagen und Werkzeuge auf ein Minimum reduziert werden können.

Erfindungsgemäß wird die Aufgabe mit den Merkmalen des Patentanspruchs 1 und den Merkmalen des unabhängigen Anspruchs 5 gelöst. Vorteilhafte Ausgestaltungen der Erfindung sind in den jeweils nachfolgenden Unteransprüchen angegeben, deren Merkmale einzeln oder in beliebiger Kombination miteinander oder mit den Merkmalen des Anspruches 1 bzw. 5 angewendet werden können.

Der erfindungsgemäße Kunststoff- Laugenbehälter zeichnet sich durch in der Form veränderte Bindenähte im Bereich von einer mit dem Kunststoff umspritzten Lageraufnahme des Laugenbehälters aus. Insbesondere ist die Form der Bindenaht in ihrer quer zur Bauteiloberfläche liegenden Erstreckung gegenüber einer näherungsweise gradlinigen Erstreckung verformt und im Innenbereich (6) zumindest bereichsweise aufgelöst oder unterbrochen ist. Unter der quer zur Bauteiloberfläche liegende Ersteckung der Bindenaht wird der Verlauf bzw. die Form der Bindenaht verstanden, die sich an einem Schnitt durch das Kunststoffbauteil abzeichnet, welcher vorzugsweise senkrecht zum Verlauf der Bindenaht an der Bauteiloberfläche und senkrecht zu der Bauteiloberfläche liegt. In weiterer Ausgestaltung der Erfindung weist dar Laugenbehälter, nur im Randbereich erkennbare Bindenähte auf.

Insbesondere ist im Bereich der Lageraufnahme keine Bindenaht vorhanden, die in ihrer quer zur Bauteiloberfläche liegenden Erstreckung einen näherungsweise gradlinigen und durch das Material hindurchgehenden Verlauf aufweist Dabei weisen die Bindenähte, die nicht im Innenbereich zumindest bereichsweise aufgelöst oder unterbrochen sind, in ihrer quer zur Bauteiloberfläche liegenden Erstreckung bevorzugt einen Verlauf auf, der zumindest bereichsweise der Form einer Glocke ähnelt.

Zur Herstellung des Laugenbehälters kommt gemäß der Erfindung eine Spritzgießtechnik zur Anwendung, die gegenüber bekannten Verfahren nur geringfügig modifiziert ist. Insbesondere ist es von Vorteil, dass das Verfahren auch bei einer Standard-Spritzgießtechnik, welche nur eine Spritzgießeinheit für das Zuführen von fluiden Kunststoff aufweist, anwendbar ist. Wie bei bekannten Verfahren wird das Kunststoff-Bauteil in Form einer Seitenwand eines Laugenbehälters mit einer integrierten Lageraufnahme komplett in einem Spritzguss-Vorgang hergestellt, wobei der fluide Kunststoff über mindestens zwei Anschnitte der Spritzgießform zugeführt wird.

Kennzeichnend für das erfindungsgemäße Verfahren ist, dass die Zuführung des fluiden Kunststoffs über die vorhandenen Anschnitte in der Spritzgießform nach einem vorgegebenen Zeitregime erfolgt, das empirisch durch Versuche oder durch Simulation ermittelt wird. Gemäß der Erfindung beinhaltet das Zeitregime die Variation der einzelnen Masseflüsse durch die Anschnitte, insbesondere eine kurzzeitige Masseflussreduzierung oder die kurzzeitige Unterbrechung der Kunststoffzuführung über mindestens einen der in der Spritzgießform vorhandenen Anschnitte, und das Zeitregime wird für jeden Laugenbehaltertyp in Abhängigkeit von der Anzahl der Anschnitte und der pro Zeiteinheit injizierten Kunststoffmenge ermittelt. Gesteuert wird der Materialfluss durch Ventile, die in den Zuführungen zur Kavität der Spritzgießform angeordnet sind. Das Zeitregime ist somit insbesondere bestimmt durch die entsprechenden Ein- und Ausschaltzeiten der Ventile. Geometrisch bedingt bzw. aufgrund der Zuführung der Masse über mehrere Anschnitte, bilden sich innerhalb der Kavität mehrere Masseströme aus, die nachfolgend als Teilströme bezeichnet werden.

Bei dem erfinderischen Verfahren ist vorgesehen, die Ausbildung der Bindenähte durch die Auswahl des Zeitregimes zu beeinflussen und damit an spezielle Festigkeitserfordernisse anzupassen. Als vorteilhaft hat sich erwiesen, den Zufluss mindestens eines der Teilströme des fluiden Kunststoffs zum Zeitpunkt des Aufeinandertreffens der Fließfronten oder unmittelbar vor dem Zusammentreffen der Fließfronten zu unterbrechen oder zu reduzieren.
Durch Anwendung des erfindungsgemäßen Verfahrens sind Kunststoff-Bauteile des Laugenbehälters herstellbar, die im Bereich der Bindenähte eine erhöhte Festigkeit aufweisen. Die Gefahr von Rissbildungen in diesem Bereich wird dadurch minimiert, dass die Bindenaht quer zur Materialdicke unterbrochen ist. Dies ist insbesondere im hoch belasteten Bereich von der mit dem Kunststoff umspritzten Lageraufnahme des Laugenbehälters wesentlich, da im Bereich der Bauteile bzw. im Lagerbereich konstruktionsbedingt die Materialdicken am stärksten sind und schon durch das Aufschrumpfen des Kunststoffs auf eine umspritzte Lageraufnahme erhebliche Spannungen im Material erzeugt werden, wobei vor allem Risse in diesem Bereich zu vermeiden sind. Es hat sich gezeigt, dass die Teilströme dabei nicht zu früh reduziert oder unterbrochen werden dürfen, d.h. eine Veränderung der Teilströme deutlich vor dem Zusammentreffen der Fließfronten, da sich sonst die gewünschte Verformung der Bindenaht nicht richtig ausbilden kann. Dies rührt daher, dass eine Fließfront, die stehenbleibt sehr schnell erstarrt und eine Bindehaut ausbildet.
Die Ausbildung der die Bindenaht stabilisierenden und über den Materialquerschnitt verlaufende Glockenform ist in Bereichen hoher Materialdicken am stärksten ausgeprägt mit der Wirkung, dass in diesen sensiblen Bereichen des Laugenbehälters die Belastbarkeit des Kunststoff-Bauteils im Bereich einer solchen Bindenaht deutlich erhöht gegenüber einem Bereich mit einer überwiegend gradlinig verlaufenden Bindenaht ist. Dieser vorteilhafte Effekt ergibt sich automatisch aus der Anwendung des Verfahrens, ein weiterer Steuerungsaufwand ist nicht erforderlich.
Darüber hinaus kann mit dem Verfahren erreicht werden, dass eine Bindenaht im Verlauf quer durch das Material unterbrochen wird.
Ein weiterer Vorteil der Erfindung liegt darin, dass für das Verfahren die vorhandenen Anlagen, insbesondere Standard-Spritzgießmaschinen mit nur einer Spritzgießeinheit zur Zuführung von fluiden Kunststoff, und Werkzeuge genutzt werden können, die bei bekannten Verfahren eingesetzt werden und deren Handhabung sicher beherrscht wird. Es sind keine zusätzlichen Investitionen erforderlich, so dass sich die Herstellkosten für den erfinderischen Kunststoff-Laugenbehälter einer Haushaltswaschmaschine, nicht erhöhen.
Nachfolgend werden das erfinderische Kunststoff-Bauteil und das Verfahren zu dessen Herstellung am Beispiel eines Laugenbehälters und eines Verfahrens zur Herstellung des Laugenbehälters beispielhaft unter Bezugnahme auf die aufgeführten Zeichnungen näher erläutert. Es zeigen:
Figur 1: Laugenbehälterseitenwand in Schnittdarstellung durch die Achslinie
Figur 2: Laugenbehälterseitenwand in Draufsicht
Figur 3: Bindenaht geschnitten senkrecht zur ihrer radialen Erstreckung - bekannter Laugenbehälter
Figur 4: Bindenaht geschnitten senkrecht zur ihrer radialen Erstreckung eines Laugenbehälters - gemäß einem ersten Beispiel.
Figur 5: Bindenaht - gemäß einem zweiten Beispiel.
Figur 5A: Bindenaht - gemäß einem dritten Beispiel.
Figur 6: Bindenaht gemäß der Erfindung.

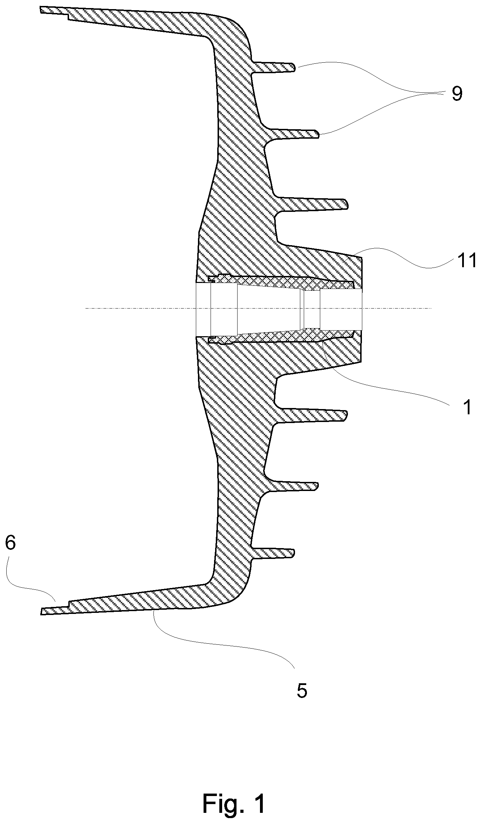

Figur 1 zeigt eine im Spritzgussverfahren einstückig hergestellte Laugenbehälterseitenwand in Schnittdarstellung senkrecht durch die Trommelachse. Die in der Zeichnung dargestellte Ausführungsform enthält die hintere Seitenwand 10 des Laugenbehälters mit der Lageraufname 1 für die Trommelwelle, einen Übergangsbereich 5 zum zylindrischen Laugenbehälter-Mantel und eine Aufnahme 12 zum Fügen und Verschrauben des Laugenbehälter-Mantels, sowie eingeformte Verstärkungsrippen 9. Die Stärke der Seitenwand 10 und die Höhe der Verstärkungsrippen 9 nehmen festigkeitsbedingt von der Lageraufnahme 1 zum Behältermantel hin ab. Die Laugenbehälterseitenwand 10 weist drei Bindenähte 2 auf, die sich gerade verlaufend von der Lageraufnahme 1 ausgehend radial zum Rand erstrecken. In allen Zeichnungen sind die Bindenähte 2 als gestrichelte Linie dargestellt.

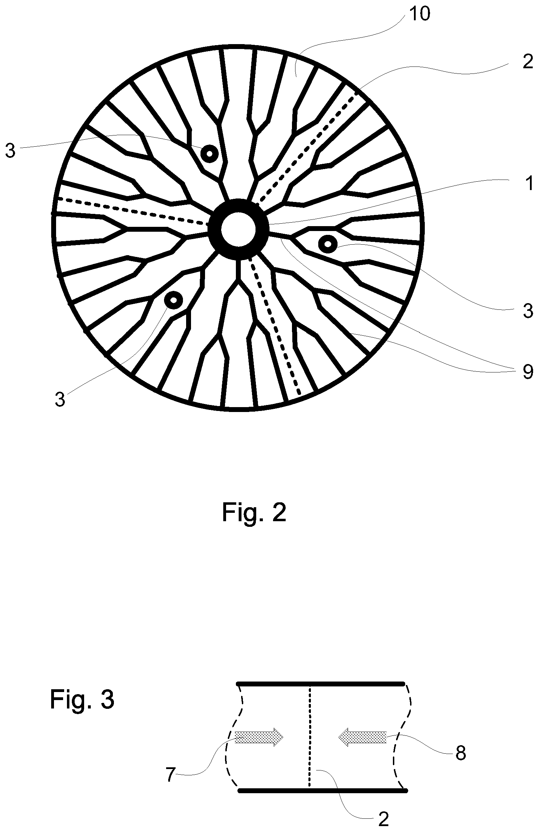

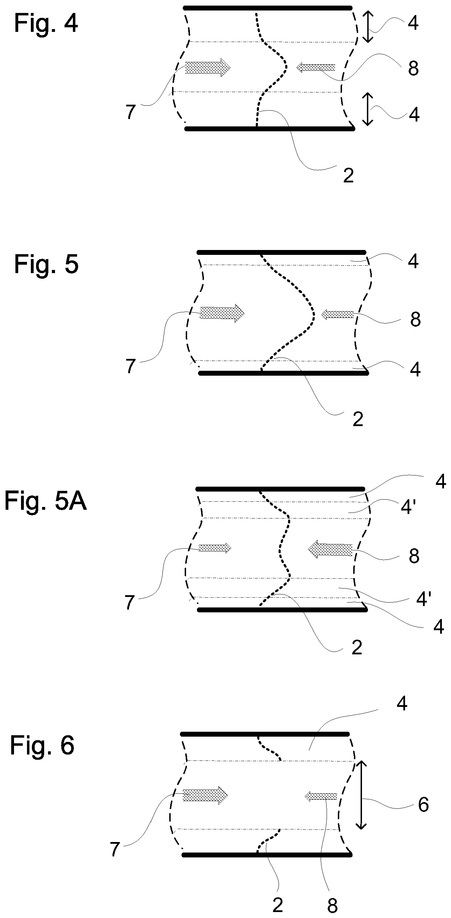

Figur 2 zeigt die Laugenbehälterseitenwand 10 in Draufsicht. In dieser Ansicht unterscheidet sich der hier vorgestellte Laugenbehälter nicht von bekannten Ausführungsformen von Laugenbehältern. Die Besonderheit der für den Laugenbehälter charakteristischen Bindenähte 2 ist aus den Figuren 4, 5, 5A und 6 erkennbar. Die Abbildungen zeigen die Bindenähte 2 im Schnitt senkrecht zu ihrer radialen Erstreckung durch die Laugenbehälterseitenwand 10. Die Schnittlinie der Bindenähte 2 weist eine glockenähnliche Form auf (Figur 4 und 5) und ist damit deutlich länger als die gerade Bindenaht 2 bei bekannten Laugenbehältern, die in Figur 3 zum Vergleich dargestellt ist.
Wie in Figur 6 dargestellt, ist auch ein erfindungsgemäßes Auflösen der Bindenaht 2 im Innenbereich 6 erreichbar. Durch die besondere Ausprägung der Bindenähte 2 erhält der Laugenbehälter eine höhere Festigkeit, der Laugenbehälter ist für Rissbildungen deutlich weniger anfällig. In Abhängigkeit der Bauteilsausführung und der Prozessparameter für das Herstellverfahren können sich auch Bindenähte mit einer leicht abweichenden Form ausbilden.
Die Laugenbehälterseitenwand 10, mit der im Zentrum angeordneten, vom Kunststoff eingeschlossenen Lageraufnahme 1, wird in einem Spritzgießvorgang komplett hergestellt. Dazu wird eine Spritzgießform mit mehreren Anschnitten 3 verwendet, wie sie zur Herstellung größerer Laugenbehälter üblich ist. Für das Verfahren sind keine Veränderungen an der Konstruktion der Spritzgießform erforderlich.

Bei der beispielhaft in Figur 2 dargestellten Laugenbehälterseitenwand 10 sind drei konzentrisch zur Lageraufnahme 1 und symmetrisch verteilte Anschnitte 3 erkennbar, über die beim Spritzgießen der fluide Kunststoff injiziert wurde. Die Verteilung der Anschnitte 3 ist von der speziellen Form des Laugenbehälters abhängig. Andere als die in der Figur 2 dargestellten Verteilungen der Anschnitte 3 sind durchaus üblich. Von jedem Anschnitt 3 ausgehend bilden sich beim Spritzgießen Fließfronten 7, 8 aus, die sich aufeinander zu bewegen. Die Fließfronten 7, 8 treffen entlang der radial von der Lageraufnahme 1 zum Rand der Laugenbehälterseitenwand verlaufenden Linie aufeinander und bilden die drei dargestellten Bindenähte 2.

Nach Vorgabe des Verfahrens wird die Injektion des fluiden Kunststoffs über mindestens einen der Anschnitte 3 kurzzeitig unterbrochen, wobei über mindestens einem der weiteren Anschnitte 3 weiter Material zugeführt wird. In der Folge wird die Bewegung des Materials in der Kavität verändert. Diese Bewegungsänderung führt dazu, dass die Bewegung der Fließfront 8, wie es in den Figuren 4, 5 und 6 gezeigt ist, unterbrochen bzw. verlangsamt wird. Das Material der unter erhöhtem Druck stehenden Fließfront 7 durchströmt die Grenzfläche der Fließfronten 7, 8 bzw. schiebt sich zungenartig in die kurzzeitig unterbrochene Fließfront 8. Der schwächere Pfeil kennzeichnet in den Figuren 4, 5 und 6 die kurzzeitig unterbrochene Fließfront 8. Der stärkere Pfeil symbolisiert die Fließfront 7, die unter gleich bleibendem Druck steht.

Nachdem die Bindenahtebene 2 durchströmt bzw. verformt ist, werden alle Ventile wieder geöffnet. Resultat sind Bindenähte 2, deren Schnittlinien die dargestellte Form aufweisen. Die glockenähnliche Form der Bindenähte 2 bildet sich aus durch Haftung der Kunststoffschmelze an den Innenwänden der Spritzgießform und durch die geringere Fließfähigkeit des Kunststoffs infolge der Abkühlung an den Rändern der Spritzgießform.

Die kurzzeitige Unterbrechung des Materialflusses ist die bevorzugte Verfahrensvariante, da für diese vorhandene Anlagen eingesetzt werden können, die auch für bekannte Verfahren gebräuchlich sind. Gesteuert wird die Zufuhr des fluiden Kunststoffs über nicht dargestellte Ventile, die in den ebenfalls nicht dargestellten Zuführungsleitungen zur Spritzgießform angeordnet sind. Das Zeitregime zur Steuerung der Ventile ist durch Simulation ermittelt worden. Im in Fig. 2 dargestellten Beispiel mit drei Anschnitten 3 wird die Zufuhr des fluiden Kunststoffes über zwei Anschnitte 3 kurzzeitig unterbrochen, wobei die Unterbrechungen zeitlich versetzt erfolgen.

Die in Figur 4 dargestellte zumindest bereichsweise glockenähnliche Form der Bindenaht 2 bildet sich aus, wenn die Zuführung des fluiden Kunststoffs zum Zeitpunkt des Aufeinandertreffens oder kurz nach dem Zusammentreffen der Fließfronten 7, 8 unterbrochen bzw. reduziert wird. Erkennbar weist die Bindenaht 2 einen breiteren Randbereich 4 auf, der nur eine geringfügige Formveränderung aufweist. Die Breite des Randbereiches ist abhängig vom Zeitpunkt des Unterbrechens bzw. des Reduzieren der Zuführung.
Figur 5 zeigt eine Bindenaht 2, die sich ausbildet, wenn der Spritzgießvorgang nach einem Zeitregime gesteuert wird, bei dem der Materialfluss der Teilströme 7, 8 bei dem Teilstrom 8 unmittelbar vor dem Aufeinandertreffen der Fließfronten 7, 8 unterbrochen wird. Die sich dabei ausbildende Bindenaht 2 unterscheidet sich von der in Figur 4 dargestellten dadurch, dass die Durchdringung der Fließfronten 7, 8 in den Randbereichen 4 stärker ausgeprägt ist.
In einer weiteren Ausführungsart wird die Fig. 5 gezeigte Ausführungsform dadurch weitergebildet, dass nach der Unterbrechung oder Verminderung des Teilstroms 8 über den zuvor geschlossenen Anschnitt 3 bzw. die zuvor geschlossenen Anschnitte 3 wieder erneut Material der Kavität zugeführt wird und die Materialzufuhr über mindestens einen zuvor geöffneten Anschnitt 3 reduziert bzw. unterbrochen wird. Hierdurch wird erreicht, dass eine erneute Bewegungsänderung der Fließfronten 7 und 8, insbesondere eine Umkehrung der Bewegungsänderung, stattfindet. In diesem zweiten Schritt wird die Bewegung der Fließfront 7, wie es in Fig. 5A gezeigt ist, unterbrochen bzw. verlangsamt, wodurch die sich bereits glockenförmig ausgebildete Bindenaht 2 im mittleren Bereich zurückgeschoben wird. Aufgrund der Abkühlung ist die Fließfähigkeit auch im erweiterten Randbereich 4' herabgesetzt, weshalb sich die Bindenaht 2 in diesem Randbereich 4' nur noch unwesentlich ändert. Das Material der unter erhöhtem Druck stehenden Fließfront 8 schiebt sich zungenartig in die kurzzeitig unterbrochene Fließfront 7 oder kann gegebenenfalls auch die Grenzfläche bzw. Bindenaht der Fließfronten 7, 8 durchströmen. Die in Fig. 5A gezeigte Bindenaht 2 weist daher gleich an mehreren Bereichen einen jeweils glockenförmigen Verlauf auf.

Erreichbar ist auch das erfindungsgemäße Ergebnis wie es in Figur 6 dargestellt ist. Die Bindenaht ist im Innenbereich aufgelöst bzw. unterbrochen, d.h. die Bindenaht kann durch bekannte Tests nicht mehr nachgewiesen werden. Im Labor durchgeführte Bruchversuche haben ergeben, dass das Material völlig unregelmäßig bricht im Gegensatz zu Laugenbehältern bekannter Art, bei denen die Bruchkante entlang der Bindenähte verläuft.

Die in den Figuren 4, 5, 5A und 6 abgebildeten Bindenähte 2 sind unter gleichen technologischen Bedingungen hergestellt worden. Die unterschiedliche Ausbildung der Bindenähte 2 wird erzielt ausschließlich durch Variation des Zeitregimes zur Steuerung des Spritzgießvorgangs. Das hier vorgestellte Verfahren lässt sich in einfacher Weise so steuern, dass unterschiedliche Formen von Bindenähten 2 herstellbar sind. Das Verfahren bietet damit die Möglichkeit Laugenbehälter herzustellen, deren Festigkeit zumindest in gewissen Grenzen an den konkreten Anwendungsfall angepasst ist.

### Bezugszeichen

- 1.: Lageraufnahme
- 2.: Bindenaht
- 3.: Anschnitt
- 4.: Randbereich
- 4'.: An Randbereich 4 angrenzender Randbereich
- 5.: Mantelfläche
- 6.: Innenbereich
- 7.: Teilstrom 1 bzw. Fließfront 1 des Teilstroms 1
- 8.: Teilstrom 2 bzw. Fließfront 2 des Teilstroms 2
- 9.: Verstärkungsrippen
- 10.: Seitenwand
- 11.: Bereich um die Lageraufnahme
- 12.: Aufnahme für den Laugenbehältermantel

## Patentansprüche

1. Kunststoff-Laugenbehälter für eine Waschmaschine oder einen Waschtrockner mit Bindenähten, die sich beim Spritzgießen durch das Aufeinandertreffen verschiedener Fließfronten (7, 8) des fluiden Kunststoffes ergeben, **dadurch gekennzeichnet, dass** mindestens eine der Bindenähte (2) in ihrer quer zur Oberfläche des Laugenbehälter liegenden Erstreckung gegenüber einer näherungsweise gradlinigen Erstreckung verformt und im Innenbereich (6) zumindest bereichsweise aufgelöst oder unterbrochen ist.

2. Kunststoff-Laugenbehälter nach Anspruch 1, **dadurch gekennzeichnet, dass** der Kunststoff-Laugenbehälter eine in einer Seitenwand (10) des Laugenbehälters angeordneten metallischen Lageraufnahme (1) für die Aufnahme einer Welle einer im Laugenbehälter angeordneten Wäschetrommel beinhaltet, wobei die Lageraufnahme (1) von Kunststoff umspritzt ist und dass zumindest die bereichsweise unterbrochene Bindnaht (2) im Bereich (11) der Lageraufnahme (1) ausgebildet ist.

3. Kunststoff-Laugenbehälter Anspruch 2, **dadurch gekennzeichnet, dass** im Bereich (11) der Lageraufnahme (1) keine Bindenaht (2) vorhanden ist, die in ihrer quer zur Oberfläche des Laugenbehälters liegenden Erstreckung einen näherungsweise gradlinigen und durch das Material hindurchgehenden Verlauf aufweist.

4. Kunststoff-Laugenbehälter nach Anspruch 3, **dadurch gekennzeichnet, dass** der Verlauf der Bindenähte (2), die nicht im Innenbereich (6) zumindest bereichsweise aufgelöst oder unterbrochen sind, in ihrer quer zur Oberfläche des Laugenbehälters liegenden Erstreckung zumindest bereichsweise der Form einer Glocke ähnelt.

5. Spritzgieß-Verfahren zur Herstellung eines Kunststoff-Bauteils in Form eines Kunststoff-Laugenbehälters für eine Waschmaschine oder einen Waschtrockner, wobei das Kunststoff-Bauteil eine Seitenwand (10) eines Laugenbehälter mit einer integrierten metallischen Lageraufnahme (1) für die Halterung und Führung einer Welle einer in dem Laugenbehälter gelagerten Wäschetrommel umfasst und die Lageraufnahme (1) umspritzt wird, in einem Arbeitsgang unter Verwendung einer Spritzgießform mit mehreren Anschnitten zum Injizieren des fluiden Kunststoffes, wobei die Zuführung des Kunststoffes über die einzelnen Anschnitte steuerbar ist und sich von den Anschnitten ausgehend Teilströme verschiedener Fließfronten des fluiden Kunststoffes ergeben, die beim Aufeinandertreffen Bindenähte bilden, **dadurch gekennzeichnet, dass** während des Arbeitsganges die Zufuhr des fluiden Kunststoffes über mindestens einen der Anschnitte (3) kurzzeitig unterbrochen wird oder kurzzeitig unter vermindertem Druck erfolgt und dass die kurzzeitige Unterbrechung der Zufuhr oder die druckreduzierte Zufuhr des fluiden Kunststoffes erfolgt, wenn sich an den von den Anschnitten (3) erzeugten Fließfronten (7, 8) Bindenähte (2) ausgebildet haben, und dass der Zufluss mindestens eines der Teilströme des fluiden Kunststoffs zum Zeitpunkt des Aufeinandertreffens der Fließfronten (7, 8) oder unmittelbar vor dem Zusammentreffen der Fließfronten (7, 8) unterbrochen oder reduziert wird, so dass zumindest eine bereichsweise unterbrochene Bindnaht (2) im Bereich (11) der Lageraufnahme (1) ausgebildet wird.

6. Spritzgieß-Verfahren nach Anspruch 5, **dadurch gekennzeichnet, dass** während des Arbeitsganges die Zufuhr des fluiden Kunststoffes über mehrere Anschnitte (3) zeitlich versetzt kurzzeitig unterbrochen wird oder kurzzeitig unter vermindertem Druck erfolgt.

## Claims

1. Plastic tub for a washing machine or a washer/dryer, having joint lines, which result when different flow fronts (7, 8) of the fluid plastic meet during injection moulding, **characterised in that** the shape of at least one of the joint lines (2) is changed in its extension perpendicular to the surface of the tub compared with an approximately straight extension and said joint line (2) is eliminated at least in parts or interrupted in the inner region (6).

2. Plastic tub according to claim 1, **characterised in that** the plastic tub has a metal bearing holder (1) disposed in a side wall (10) of the tub to hold a shaft of a laundry drum disposed in the tub, plastic being injected around the bearing holder (1) and at least the in parts interrupted joint line (2) being configured in the region (11) of the bearing holder (1).

3. Plastic tub according to claim 2, **characterised in that** in the region (11) of the bearing holder (1) no joint line (2) is present, which has an approximately straight course passing through the material in its extension perpendicular to the surface of the tub.

4. Plastic tub according to claim 3, **characterised in that** the course of the joint lines (2), which are not eliminated at least in parts or interrupted in the inner region, in its extension perpendicular to the surface of the tub resembles the shape of a bell at least in parts.

5. Injection moulding method for producing a plastic component in the form of a plastic tub for a washing machine or a washer/dryer, wherein the plastic component comprises a side wall (10) of a tub with an integrated metal bearing holder (1) to support and guide a shaft of a laundry drum supported in the tub and plastic is injected around the bearing holder (1), in one pass using an injection mould with a number of gates for injecting the fluid plastic, wherein the delivery of the plastic by way of the individual gates can be controlled and substreams of different flow fronts of the fluid plastic going out from the gates result, which form joint lines when they meet, **characterised in that** during the pass the delivery of the fluid plastic by way of at least one of the gates (3) is briefly interrupted or takes place briefly at reduced pressure and the brief interruption of the delivery or the reduced pressure delivery of the fluid plastic takes place when joint lines (2) have formed at the flow fronts (7, 8) produced by the gates (3) and the inflow of at least one of the substreams of the fluid plastic is interrupted or reduced at the time when the flow fronts (7, 8) meet or immediately before the flow fronts (7, 8) come together so that at least one in parts interrupted joint line (2) is configured in the region (11) of the bearing holder (1).

6. Injection moulding method according to claim 5, **characterised in that** during the pass the delivery of the fluid plastic by way of a number of gates (3) is briefly interrupted at different times or takes place briefly at reduced pressure.

## Revendications

1. Cuve à liquide de lavage en matière plastique pour un lave-linge ou un lave-linge séchant, comprenant des lignes de liaison qui, lors du moulage par injection, sont obtenues en raison de la rencontre de différents fronts de coulée (7, 8) de la matière plastique fluide, **caractérisée en ce qu'**au moins une des lignes de liaison (2), dans son étendue située transversalement à la surface de la cuve à liquide de lavage, est déformée par rapport à une étendue approximativement rectiligne et est dissoute ou interrompue au moins par sections dans la partie intérieure (6).

2. Cuve à liquide de lavage en matière plastique selon la revendication 1, **caractérisée en ce que** la cuve à liquide de lavage en matière plastique comprend un logement de palier (1) métallique, disposé dans une paroi latérale (10) de la cuve à liquide de lavage pour le logement d'un arbre d'un tambour à linge disposé dans la cuve à liquide de lavage, le logement de palier (1) étant surmoulé de matière plastique, et **en ce qu'**au moins la ligne de liaison (2) interrompue par sections est réalisée dans la partie (11) du logement de palier (1).

3. Cuve à liquide de lavage en matière plastique selon la revendication 2, **caractérisée en ce que** dans la partie (11) du logement de palier (1) aucune ligne de liaison (2) n'est présente, laquelle, dans son étendue située transversalement à la surface de la cuve à liquide de lavage, présente une allure approximativement rectiligne et continue à travers la matière.

4. Cuve à liquide de lavage en matière plastique selon la revendication 3, **caractérisée en ce que** l'allure des lignes de liaison (2), qui ne sont pas dissoutes ou interrompues au moins par sections dans la partie intérieure (6), ressemble au moins approximativement à la forme d'une cloche dans son étendue située transversalement à la surface de la cuve à liquide de lavage.

5. Procédé de moulage par injection pour la fabrication d'un composant en matière plastique en forme d'une cuve à liquide de lavage en matière plastique pour un lave-linge ou un lave-linge séchant, le composant en matière plastique comprenant une paroi latérale (10) d'une cuve à liquide de lavage ayant un logement de palier (1) métallique intégré pour le support et le guidage d'un arbre d'un tambour à linge logé dans la cuve à liquide de lavage, et le logement de palier (1) étant surmoulé, dans une opération de travail avec utilisation d'un moule d'injection ayant plusieurs découpes, pour injecter la matière plastique fluide, l'alimentation de la matière plastique étant commandable par l'intermédiaire de chacune des découpes et résultant des flux partiels, partant des découpes, de différents fronts de coulée de la matière plastique fluide, lesquels forment des lignes de liaison lorsqu'ils se rencontrent, **caractérisé en ce que** pendant l'opération de travail, l'alimentation de la matière plastique fluide est temporairement interrompue par l'intermédiaire d'au moins une des découpes (3) ou est réalisée temporairement sous une pression diminuée, et **en ce que** l'interruption temporaire de l'alimentation ou l'alimentation sous pression diminuée de la matière plastique fluide est réalisée lorsque des lignes de liaison (2) se sont formées sur les fronts de coulée (7, 8) produits par les découpes (3), et **en ce que** l'afflux d'au moins un des flux partiels de la matière plastique fluide est interrompu ou diminué au moment de la rencontre des fronts de coulée (7, 8) ou directement avant la rencontre des fronts de coulée (7, 8) de sorte qu'au moins une ligne de liaison (2) interrompue par sections est réalisée dans la partie (11) du logement de palier (1).

6. Procédé de moulage par injection selon la revendication 5, **caractérisé en ce que** pendant l'opération de travail, l'alimentation de la matière plastique fluide est temporairement interrompue de manière temporellement décalée ou est réalisée temporairement sous pression diminuée par l'intermédiaire de plusieurs découpes (3).
